# FASCICULE DE BREVET EUROPEEN

(11) **EP 0 579 525 B1**
(45) Date de publication et mention de la délivrance du brevet: **10.01.1996**
(21) Numéro de dépôt: 93401704.7
(22) Date de dépôt: 01.07.1993
(51) Int. Cl.: B23P 13/02

(54) **Procédé de fabrication d'une jante pour cycle et jante réalisée avec ce procédé**
Verfahren zur Herstellung einer Fahrradfelge und nach diesem Verfahren hergestellte Felge
Manufacturing method for a bicycle rim and rim manufactured by this method

(30) Priorité: 15.07.1992 FR 9208892
(43) Date de publication de la demande: 19.01.1994
(73) Titulaire: MAVIC S.A., F-01990 Saint-Triviers sur Moignans (FR)
(72) Inventeur: Lacombe, Jean-Pierre, F-74650 Chavanod (FR)
(74) Mandataire: Lejeune, Benoit

(56) Documents cités:
- FR-A- 2 190 547
- FR-A- 2 614 844
- US-A- 1 518 283
- US-A- 3 433 327
- US-A- 4 142 394
- PATENT ABSTRACTS OF JAPAN vol. 007, no. 059 (M-199)11 Mars 1983 & JP-A-57 205 060 (ARAYA KOGYO K.K.) 16 Décembre 1982
- PATENT ABSTRACTS OF JAPAN vol. 013, no. 365 (M-859)15 Aoüt 1989 & JP-A-11 022 701 (BRIDGESTONE CYCLE CO) 16 Mai 1989

## Description

La présente invention est relative à un procédé de fabrication d'une jante pour cycles. Elle concerne aussi les jantes réalisées avec le procédé.

Les jantes et notamment celles destinées aux cycles sont réalisées par un profilé en aluminium cintré. Dans la plupart des cas, elles sont reliées au moyeu par des nappes de rayons, afin de constituer la roue du véhicule. Les profilés utilisés sont de différents types, mais ont généralement la forme d'un U comprenant deux ailes latérales dont les parois extérieures constituent les faces de freinage contre lesquelles les patins de frein sont mis en pression pour assurer le freinage désiré. Ce type de jante, bien qu'offrant certains avantages, présente toutefois un certain nombre d'inconvénients. En effet, l'opération de cintrage du profilé pour lui donner sa forme circulaire, ne permet pas d'assurer une largeur de jante de dimension précise et constante sur toute la circonférence de celle-ci. Par ailleurs, l'opération de perçage des trous destinés à recevoir les écrous des rayons provoque des gonflements locaux créant ainsi une surface de freinage irrégulière déplaisante, et l'efficacité du freinage en est réduite d'autant. Par ailleurs, la jante étant réalisée par cintrage d'un profilé, comprend immanquablement un raccord au niveau de la jonction des deux extrémités de celui-ci, raccord qui, dans la plupart des cas, est difficile à réaliser parfaitement, que la jonction soit manchonnée ou soudée. Le passage du raccord lors du freinage, provoque des à-coups, perturbant encore les qualités de freinage et accélérant le vieillissement des pièces.

Certaines autres jantes sont réalisées en matériau composite et les flancs latéraux destinés au freinage présentent eux aussi des irrégularités néfastes à un bon freinage.

La présente invention propose donc un procédé de réalisation d'une jante dont les flancs sont usinés, assurant ainsi d'une part un parfait dimensionnement en largeur des surfaces de freinage, d'autre part, une homogénéité et une continuité de celle-ci, ainsi qu'une parfaite symétrie par rapport à l'axe de la roue et du plan général de symétrie de ladite jante.

Ainsi selon l'invention, le procédé de fabrication d'une jante pour cycle est caractérisé en ce que ledit procédé comprend une étape complémentaire d'usinage des deux flancs, par enlèvement de matière pour former deux faces de freinage parfaites et d'écartement constant.

Selon une caractéristique complémentaire, l'usinage est réalisé par enlèvement de copeaux grâce à un outil de coupe, et selon une méthode préférée, l'usinage des flancs se fait par tournage.

Selon un mode d'exécution du procédé, l'usinage des deux flancs se fait simultanément, mais il peut se faire alternativement d'un côté, puis de l'autre.

Selon une disposition préférée, la jante est formée par un profilé en aluminium comprenant deux ailes latérales formant deux flancs latéraux, et selon des caractéristiques complémentaires, le procédé comprend les étapes préliminaires consistant à cintrer un morceau de profilé d'aluminium pour lui donner la forme d'un anneau de grand diamètre et mettre ainsi bout à bout les deux extrémités, puis à solidariser les deux extrémités.

Selon un mode d'exécution donné à titre d'exemple, la solidarisation des deux extrémités se fait par soudage du type étincelage.

Selon une autre caractéristique, après l'étape de soudage, on procède à une première étape annexe consistant à supprimer le cordon de soudure par usinage, tandis que dans une deuxième étape annexe, on perce les trous pour les oeillets de retenue des écrous de rayon, et dans une étape finale, on place les oeillets en les sertissant.

Selon une autre caractéristique du procédé, après l'étape complémentaire d'usinage et avant l'étape finale de mise en place des oeillets, on procède à une troisième étape annexe de traitement de la jante par anodisation, tandis que dans une variante du procédé, l'étape d'anodisation se fait avant l'étape complémentaire d'usinage.

Selon une variante d'exécution, après l'étape complémentaire d'usinage, on procède à une quatrième étape annexe consistant à déposer une couche de céramique sur les deux flancs usinés.

L'invention concerne aussi la jante réalisée avec le procédé, et dont les deux flancs sont usinés par enlèvement de matière.

D'autres caractéristiques et avantages de l'invention se dégageront de la description qui va suivre en regard des dessins annexés qui ne sont donnés qu'à titre d'exemples non limitatifs.

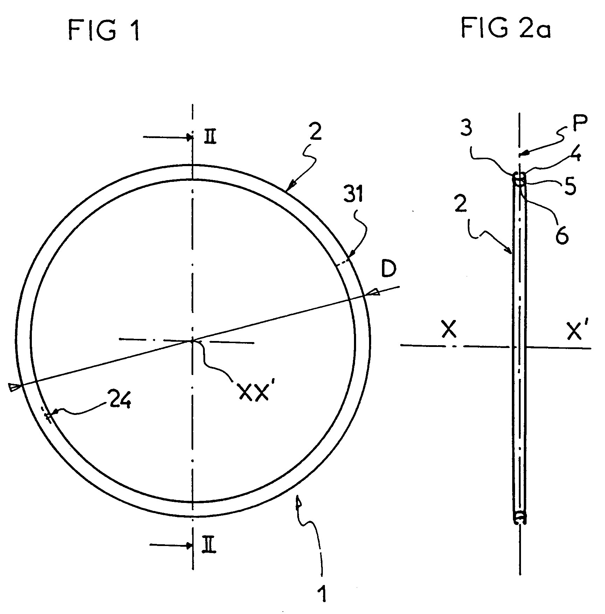

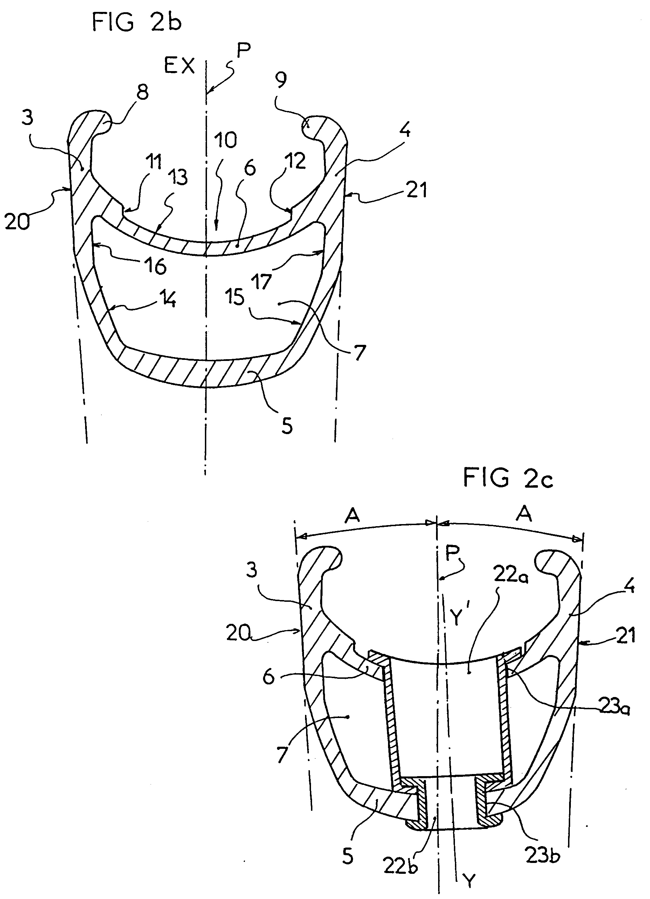

Les figures 1,2a, 2b et 2c illustrent une jante selon l'invention.

La figure 1 est une vue en plan selon l'axe de la jante.

La figure 2a est une vue en coupe diamétrale selon II-II.

Les figures 2b et 2c sont des vues de détails en coupe, à plus grande échelle, montrant le profil de la jante, dans une coupe diamétrale au niveau d'un oeillet (figure 2c) et dans une coupe au-delà du niveau d'un oeillet (figure 2b).

Les figures 3 à 10 illustrent schématiquement le procédé de fabrication selon l'invention.

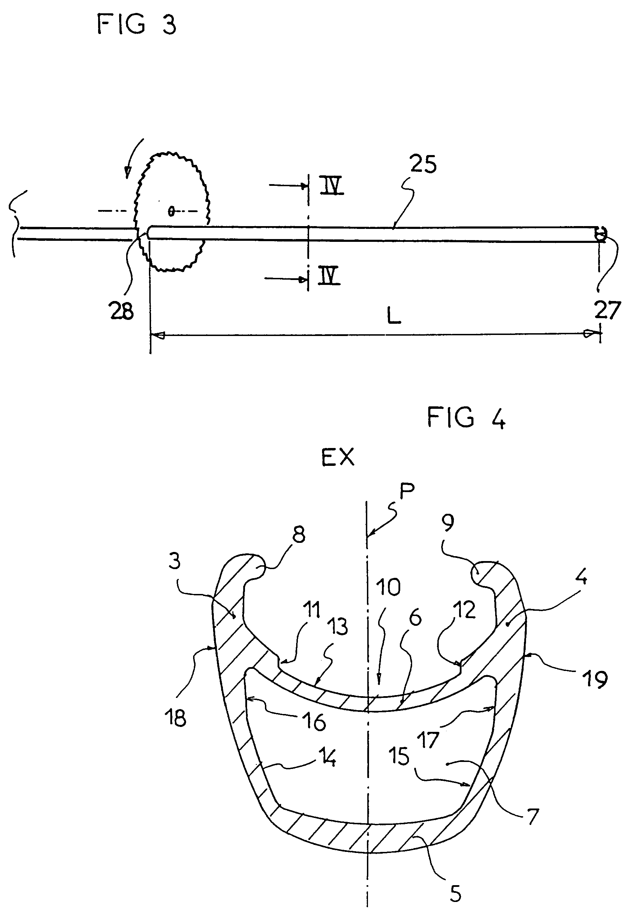

La figure 3 représente une première étape préliminaire.

La figure 4 est une vue en coupe transversale selon IV-IV de la figure 3.

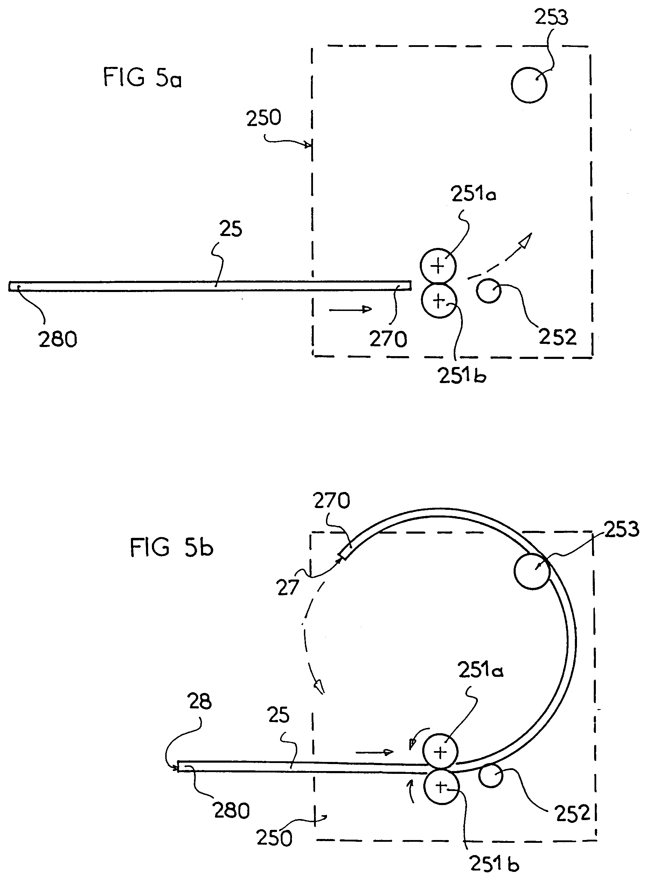

Les figures 5a, 5b et 5c illustrent les différentes phases d'une deuxième étape préliminaire, la figure 5a illustrant la phase avant le cintrage, la figure 5b illustrant le cintrage proprement dit, tandis que la figure 5c illustre la phase après cintrage.

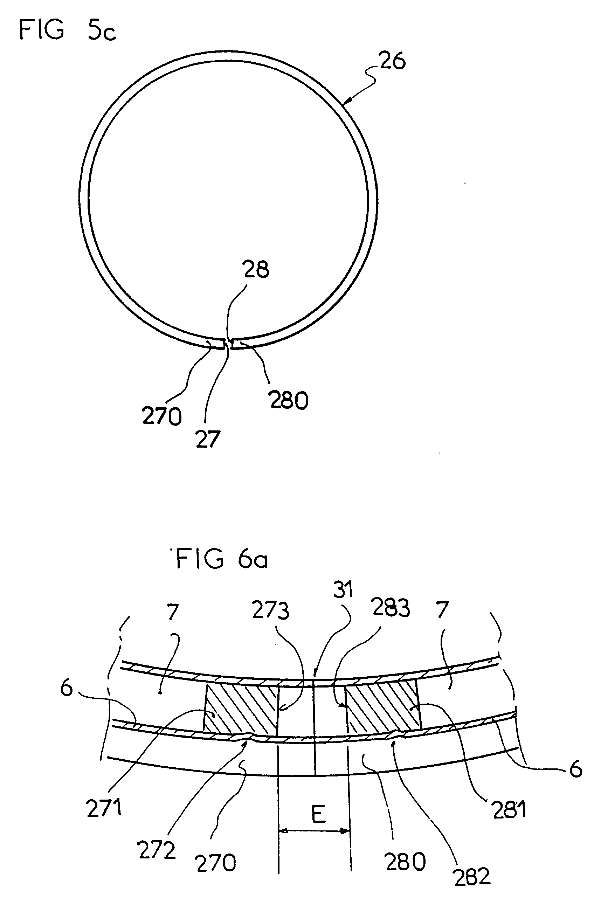

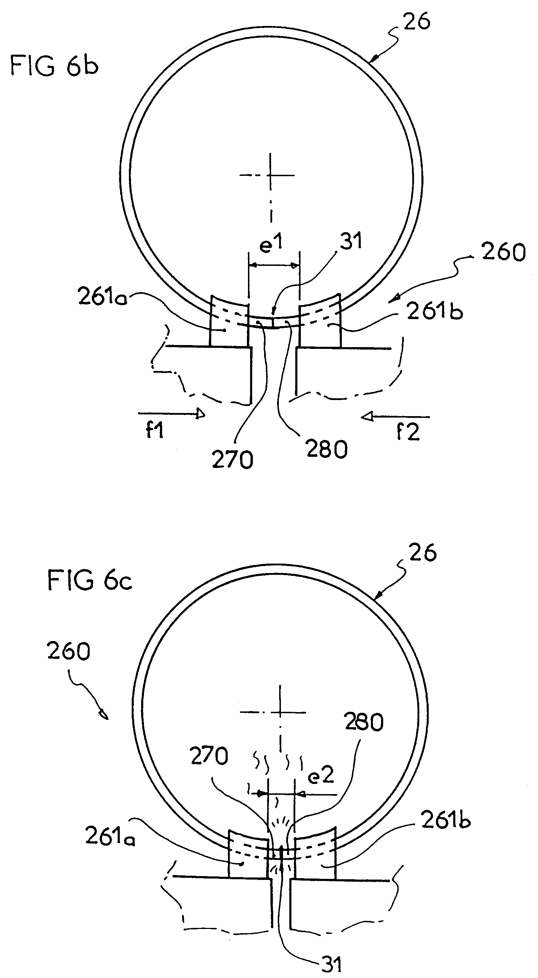

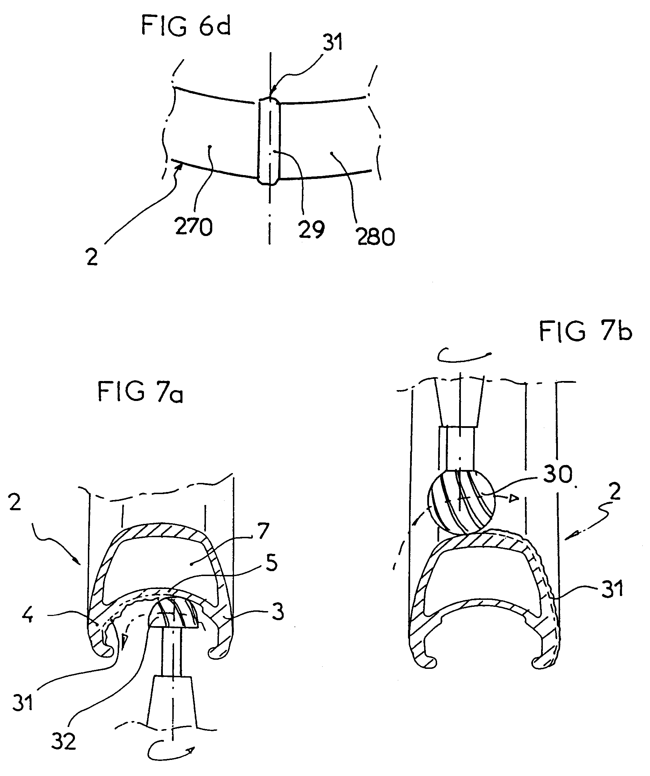

Les figures 6a, 6b, 6c et 6d illustrent une troisième étape préliminaire.

Les figures 7a et 7b illustrent une première étape annexe.

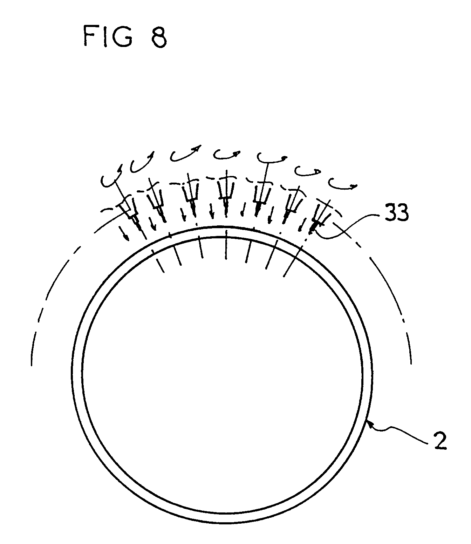

La figure 8 illustre une deuxième étape annexe.

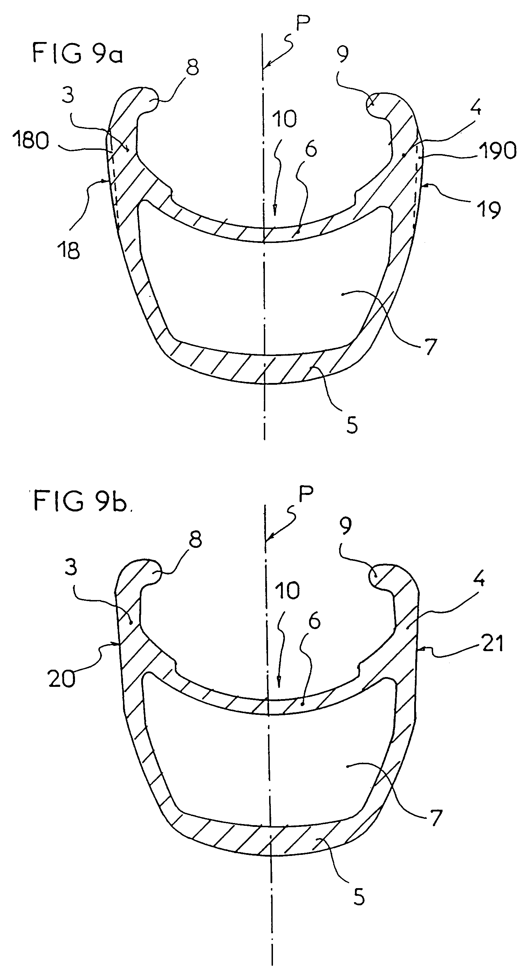

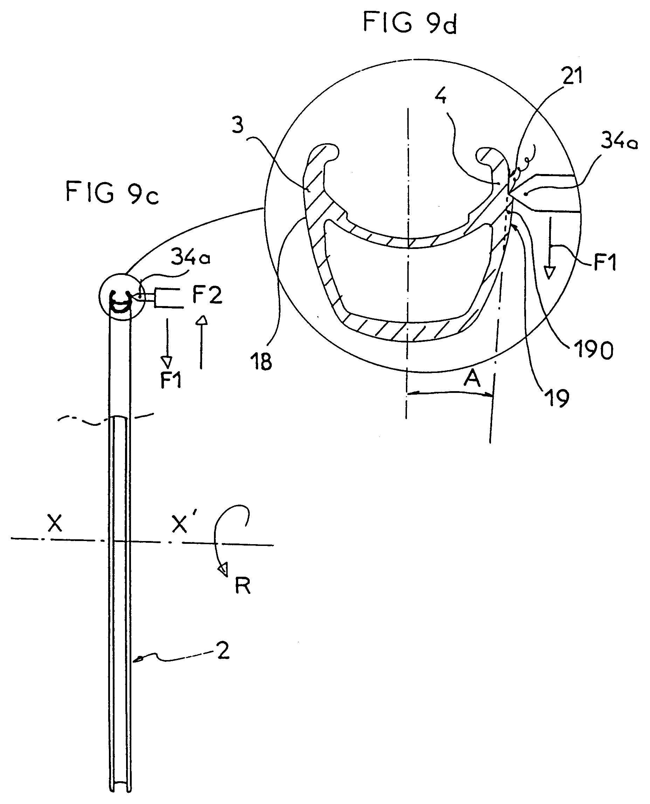

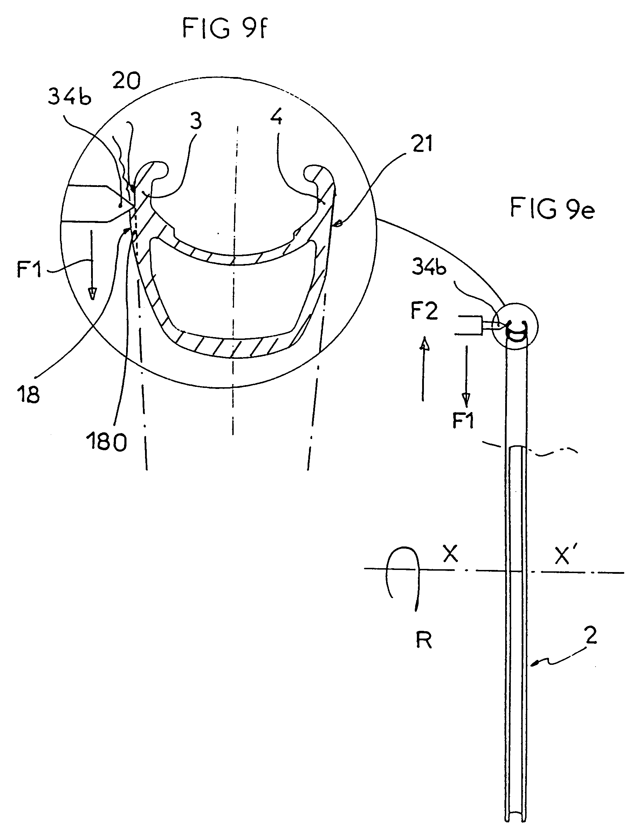

Les figures 9a, 9b, 9c, 9d, 9e, 9f illustrent l'étape complémentaire selon l'invention.

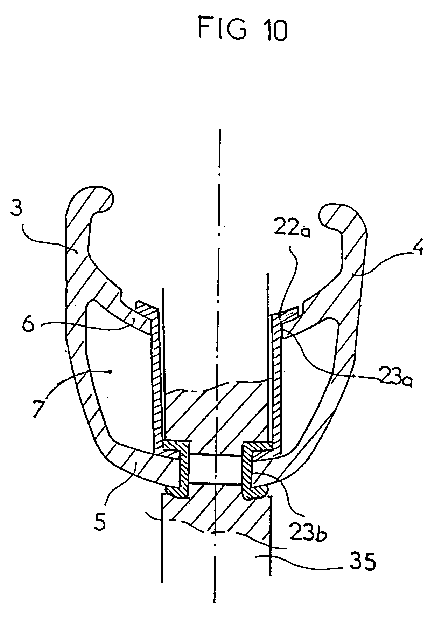

La figure 10 montre une autre des étapes annexes du procédé.

La jante selon l'invention et portant la référence générale (1) est destinée à être équipée de façon connue en soi, de rayons, d'un moyeu et d'un pneu pour constituer la roue d'un cycle. La jante proprement dite (2) de plan général de symétrie (P) est un anneau de grand diamètre d'axe (XX'), réalisé par un profilé en aluminium qui présente une section ayant la forme générale d'un U ouvert vers la périphérie extérieure, dans lequel est destiné à prendre place le pneu et la chambre à air éventuelle. Le profilé possède deux ailes (3, 4) latérales avantageusement symétriques par rapport au plan (P) reliées par deux parois transversales (5, 6) espacées l'une de l'autre : une paroi inférieure (5) et une paroi intermédiaire (6). Les deux parois (5, 6) étant légèrement courbes et formant avec des ailes latérales (3, 4) un caisson périphérique (7) destiné notamment à assurer la tenue mécanique et la rigidité de la jante, et notamment permettre aussi l'accrochage des rayons (non représenté). Notons par ailleurs que l'extrémité de chacune des ailes (3, 4) comprend une saillie locale (8, 9) destinée à retenir le pneu équipant la roue. Par ailleurs, la paroi intermédiaire (6) comprend un logement circulaire périphérique de retenue et de centrage (10) comprenant deux parois verticales (11, 12) et un fond (13) concave et dont la courbure est par exemple un cercle. De plus, les parois intérieures latérales (14, 15) du caisson (7) sont au moins en partie formées par des portions de paroi internes (16, 17) sensiblement parallèles au plan (P) de symétrie générale, tandis que leurs prolongements sont convergents.

Selon l'invention, les flancs (18, 19) de ladite jante sont usinés par enlèvement de matière pour constituer des faces diamétrales de freinage (20, 21) qui sont planes et soit parallèles entre elles et parallèles au plan de symétrie (P), soit convergentes vers l'intérieur de la roue même, comme cela est représenté à la figure 9b et qui est une solution préférée, voire convergentes vers l'extérieur (EX). Ainsi, chacune des faces peut former avec le plan (P) un angle (A) d'environ 1,5 degrés. La retenue des rayons se fait de façon classique par des oeillets (22a, 22b) fixés dans des trous (23a, 23b) réalisés dans les parois inférieure (5) et intermédiaire (6) du caisson selon des axes (YY') correspondant à ceux des rayons destinés à y être retenus. Bien entendu, la jante comprend un trou (24) destiné au passage de la valve de la chambre à air (figure 1).

Le procédé de fabrication selon l'invention de la jante est décrit ci-après et illustré schématiquement par les figures 3 à 10.

Selon ce procédé, les flancs (18, 19) de la jante sont usinés dans une étape complémentaire afin de créer sur lesdits flancs (18, 19) des faces de freinage (20, 21) de caractéristiques dimensionnelles qualitatives parfaites et dont l'état de surface, l'homogénéité et la continuité sont sans reproche. Cette étape d'usinage n'est que complémentaire et fait partie d'un ensemble d'étapes nécessaires faites avant usinage dans des étapes préliminaires, ou après usinage dans des étapes ultérieures.

L'étape complémentaire selon l'invention, illustrée schématiquement aux figures 9a, 9b, 9c, 9d, 9e et 9f, est avantageusement un usinage par enlèvement de matière et par exemple par enlèvement de copeaux grâce à un outil d'usinage. L'usinage peut être du type meulage, rectification, fraisage, mais la solution préférée est celle du tournage en faisant pivoter selon R relativement la jante et/ou l'outil autour de l'axe (XX') de la jante et en déplaçant diamétralement selon F1 ou F2, l'outil d'usinage.

Avant de décrire plus précisément cette étape complémentaire sur laquelle nous reviendrons plus loin, nous allons décrire ci-après les étapes préliminaires.

La jante (2) est réalisée principalement et de façon connue, à partir d'un morceau de profilé en aluminium cintré. Ainsi, dans une première étape préliminaire (figures 3, 4), on découpe un morceau (25) de profilé d'aluminium de longueur (L) suffisante pour qu'une fois cintré, le diamètre (D) de la jante puisse être obtenu, et qui présente une section ayant la forme générale d'un U ouvert vers la périphérie extérieure (EX), dans lequel est destiné à prendre place le pneu et la chambre à air éventuelle. Le profilé possède deux ailes (3, 4) latérales avantageusement symétriques par rapport au plan (P) reliées par deux parois transversales (5, 6) espacées l'une de l'autre : une paroi inférieure (5) et une paroi intermédiaire (6). Les deux parois (5, 6) étant légèrement courbes et formant avec des ailes latérales (3, 4) un caisson périphérique (7) destiné notamment à assurer la rigidité de la jante. Notons par ailleurs que l'extrémité extérieure de chacune des ailes (3, 4) comprend une saillie locale (8, 9) s'étendant vers le plan (P) de symétrie, destinée à retenir le pneu équipant la roue. Par ailleurs, la paroi intermédiaire (6) comprend un logement circulaire périphérique de retenue et de centrage (10) comprenant deux parois verticales (11, 12) et un fond (13) concave et dont la courbure est par exemple un cercle. De plus, les parois intérieures latérales (14, 15) du caisson (7) sont au moins en partie formées par des portions de parois internes (16, 17) sensiblement parallèles au plan (P) de symétrie générale. Les flancs latéraux (18, 19) étant légèrement courbes.

Dans une deuxième étape préliminaire illustrée aux figures 5a, 5b et 5c, on cintre le morceau de profilé (25) pour former un anneau circulaire (26) et mettre bout à bout ses deux extrémités (27, 28). L'opération de cintrage se faisant grâce à une cintreuse (250) qui comprend par exemple deux galets d'entraînement (251a, 251b), un galet de cintrage (252) et un galet de guidage (253). La figure 5a représente la phase d'introduction du profilé dans la cintreuse (250). La figure 5b illustre la phase de cintrage proprement dite. La figure 5c illustre le morceau de profilé une fois cintré, les deux extrémités (27, 28) se faisant face.

Dans une troisième étape préliminaire, on solidarise ensemble les deux extrémités (27, 28) en les soudant bout à bout, comme cela est illustré aux figures 6a, 6b, 6c et 6d. L'opération de soudure se fait par exemple électriquement par étincelage, ce qui provoque la fusion des deux extrémités en contact et les lie ensemble par fusion et liaison intime de la matière. Cette fusion de la matière due à l'échauffement généré par le passage du courant provoque la formation d'un cordon de soudure faisant un bourrelet périphérique (29) au niveau de la jointure (31). L'opération de soudage se fait grâce à une soudeuse du type à étincelage (260) comprenant deux mâchoires (261a, 261b) destinées à retenir les deux extrémités (270, 280) du morceau cintré (26). Les mâchoires sont alimentées en courant électrique et se rapprochent pendant l'opération, mutuellement selon (f1,f2), l'espace initial (e1) entre les mâchoires diminuant progressivement pour devenir (e2) inférieur à (e1). Parallèlement à l'opération de soudage, on introduit (figure 6a) dans le caisson (7) de chaque extrémité (270, 280), une éclisse (271, 281) retenue dans ledit caisson par un poinçonnage (272, 282) de la paroi (6) correspondante. Chaque éclisse est enfoncée dans le caisson d'une longueur telle qu'en fin de soudure, les deux faces (273 ,283) soient en contact. Ainsi, la distance initiale (E) est égale à (e1) moins (e2). La présence des deux éclisses empêche l'effondrement des cloisons du caisson (7) lors de l'opération de soudage.

Dans la suite du procédé, il est prévu une première étape annexe destinée à supprimer le bourrelet de soudure (29), avant que l'usinage des flancs ne soit fait dans l'étape complémentaire selon l'invention. Ainsi, dans cette première étape annexe (figures 7a, 7b), le cordon de soudure (29) est usiné extérieurement au profil et notamment au niveau des flancs, par une fraise (30) se déplaçant tout autour du profil au niveau de la soudure et dans le plan de jonction (31) (figure 7b). Par ailleurs, le cordon est aussi supprimé à l'intérieur du profil entre les ailes (3, 4) et le fond (5) grâce à une autre fraise pivotante (32) (figure 7a).

Dans une deuxième étape annexe illustrée schématiquement à la figure 8 faisant suite, on réalise les perçages de la jante pour réaliser les trous (23a, 23b) respectivement dans les parois inférieures (5) et intermédiaires (6). A cet effet, on utilise un ou plusieurs forets épaulés (33) d'axe incliné successivement d'un côté et de l'autre, afin que les deux nappes de rayons y soient retenues dans de bonnes conditions. Par ailleurs, dans cette opération, on réalise le trou (24) destiné au passage de la valve, qui est disposé avantageusement diamétralement par rapport au plan de jonction et de soudage (31).

On procède ensuite à l'étape complémentaire selon l'invention, illustrée aux figures 9a, 9b, 9c, 9d, 9e et 9f, qui consiste à usiner les flancs (18, 19) de la jante ainsi formée. La figure 9a est une vue en coupe avant usinage, tandis que la figure 9b est une vue en coupe après usinage. L'usinage est réalisé par enlèvement de la matière latérale (180, 190) pour réaliser des faces diamétrales (20, 21) de freinage parfaites aussi bien du point de vue état de surface que du point de vue dimensionnel. L'usinage peut être de tout type et peut par exemple être du tournage en faisant tourner la jante ou l'outil autour de l'axe (XX') de la roue et en déplaçant diamétralement l'outil (34a, 34b) diamétralement selon F1 et vers le centre, comme cela est représenté, ou vers l'extérieur selon F2. On réalise l'usinage d'un des flancs, et ensuite l'autre, ou les deux simultanément.

L'usinage permet d'une part d'obtenir un dimensionnement en largeur (1) précis, d'autre part de créer des faces de freinage (20, 21) parfaites, homogènes et continues, tant dans leur aspect dimensionnel que dans leur aspect état de surface. En effet, l'usinage permet en plus de faire disparaître la zone de jonction, et permet ainsi un freinage parfait sans à-coups.

Les faces de freinage (20,21) sont avantageusement symétriques par rapport au plan (P) et peuvent être parallèles entre elles, mais aussi convergeantes vers l'axe de la roue, comme cela est illustré, pour former par exemple un angle (A) d'environ 3 degrés, mais elles peuvent être tout aussi bien divergentes.

Dans une étape ultérieure ou troisième étape annexe, on fait subir à la jante ainsi usinée, un traitement anodique ou anodisation, réalisée de façon classique (non représentée).

Dans une étape suivante finale, on réalise l'oeilletage en plaçant les différents rivets (22a, 22b), comme cela est représenté à la figure 10, et grâce à une bouterolle (35).

Dans une variante de procédé, on peut, après l'étape complémentaire d'usinage, procéder à une opération annexe qui consiste à faire un dépôt de céramique sur les deux flancs (20, 21) ainsi usinés. Cette opération se faisant donc entre l'opération d'usinage et l'étape finale correspondant à celle de la pose des oeillets. Par contre, l'anodisation faite après l'usinage dans le procédé précédent est effectuée selon cette variante, avant l'usinage des flancs (18, 19).

Il va de soi que l'invention n'est pas limitée à une jante formée par un profilé en aluminium, mais qu'elle peut être de tout autre type et notamment en matériau composite ou autre.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Procédé de fabrication d'une jante pour cycle, caractérisé en ce que ledit procédé comprend une étape complémentaire d'usinage des deux flancs (18, 19) par enlèvement de matière pour former deux faces de freinage (20, 21) parfaites et d'écartement constant.

2. Procédé de fabrication d'une jante pour cycle selon la revendication 1, caractérisé en ce que l'usinage est réalisé par enlèvement de copeaux grâce à un outil de coupe (34a, 34b).

3. Procédé de fabrication d'une jante pour cycle selon la revendication 2, caractérisé en ce que l'usinage des flancs (18, 19) se fait par tournage.

4. Procédé de fabrication d'une jante pour cycle selon la revendication 3, caractérisé en ce que l'usinage des deux flancs (18, 19) se fait simultanément.

5. Procédé de fabrication d'une jante pour cycle de plan général de symétrie (P) et d'axe de symétrie générale (XX') selon l'une quelconque des revendications précédentes, caractérisé en ce que le procédé consiste à réaliser la jante avec un profilé en aluminium comprenant deux ailes latérales (3, 4) formant deux flancs latéraux (18, 19).

6. Procédé de fabrication d'une jante pour cycle selon l'une quelconque des revendications précédentes, caractérisé en ce qu'avant l'étape complémentaire, le procédé comprend les étapes préliminaires suivantes :
- cintrage d'un morceau de profilé d'aluminium (25) pour lui donner la forme d'un anneau (26) de grand diamètre et mettre ainsi bout à bout les deux extrémités (27, 28);
- solidarisation des deux extrémités (27, 28).

7. Procédé de fabrication d'une jante pour cycle selon la revendication 6, caractérisé en ce que la solidarisation des deux extrémités (27,28) se fait par soudage du type étincelage.

8. Procédé de fabrication d'une jante pour cycle selon la revendication 7, caractérisé en ce qu'après l'étape de soudage, on procède à une première étape annexe consistant à supprimer le cordon de soudure (29) par usinage.

9. Procédé de fabrication d'une jante pour cycle selon la revendication 8, caractérisé en ce qu'après la première étape annexe, on réalise une deuxième étape annexe consistant à percer les trous (23a, 23b) pour les oeillets de retenue (22a, 22b) des écrous de rayon.

10. Procédé de fabrication d'une jante pour cycle selon la revendication 8, caractérisé en ce que dans une étape finale, on place les oeillets (22a, 22b) en les sertissant.

11. Procédé de fabrication d'une jante pour cycle selon l'une quelconque des revendications précédentes, caractérisé en ce qu'après l'étape complémentaire d'usinage et avant l'étape finale de mise en place des oeillets, on procède à une troisième étape annexe de traitement de la jante par anodisation.

12. Procédé de fabrication d'une jante pour cycle selon l'une quelconque des revendications 1 à 10, caractérisé en ce qu'avant l'étape complémentaire d'usinage, on procède à une troisième étape annexe de traitement de la jante par anodisation.

13. Procédé de fabrication d'une jante pour cycle selon la revendication 12, caractérisé en ce qu'après l'étape complémentaire d'usinage, on procède à une quatrième étape annexe consistant à déposer une couche de céramique sur les deux flancs usinés.

14. Jante pour cycle, de plan général de symétrie (P) et d'axe de symétrie (XX'), réalisée par le procédé selon l'une quelconque des revendications précédentes, caractérisée en ce que ses deux flancs (18, 19) présentent des surfaces usinés par enlèvement de matière et d'écartement constant.

15. Jante pour cycle selon la revendication 14, caractérisée en ce que les deux flancs (18, 19) usinés sont parallèles au plan (P) de symétrie générale.

16. Jante pour cycle selon la revendication 15, caractérisée en ce que les deux flancs (18, 19) usinés sont convergents.

17. Jante pour cycle selon l'une quelconque des revendications 14 à 16, caractérisée en ce qu'elle est réalisée par un profilé en aluminium entre les deux ailes (3, 4).

18. Jante pour cycle selon la revendication 17, caractérisée en ce que le profilé comprend entre les deux ailes (3, 4), une gorge intérieure (10) de centrage.

## Claims

1. Manufacturing method of a rim for a cycle, characterized in that said method comprises a complementary machining step of the two flanks (18, 19) by removal of material to form two perfect and constantly spaced braking surfaces (20, 21).

2. Manufacturing method of a rim for a cycle as per claim 1, characterized in that the machining is done by removal of chips by virtue of a cutting tool (34a, 34b).

3. Manufacturing method of a rim for a cycle as per claim 2, characterized in that the machining of the flanks (18, 19) is done by turning.

4. Manufacturing method of a rim for a cycle as per claim 3, characterized in that the machining of the two flanks (18, 19) is done simultaneously.

5. Manufacturing method of a rim for a cycle having a general symmetry plane (P) and a general symmetrical axis (XX') as per any of the preceding claims, characterized in that the method consists of obtaining the rim from an aluminum section comprising two lateral wings (3, 4) forming two lateral flanks (18, 19).

6. Manufacturing method of a rim for a cycle as per any of the preceding claims, characterized in that before the complementary step, the method comprises the following preliminary steps:
- roll bending of a portion of the aluminum section (25) to give it the form/shape of a ring (26) having a large diameter and thus placing the two ends (27, 28) end to end;
- affixation of the two ends (27, 28).

7. Manufacturing method of a rim for a cycle as per claim 6, characterized in that the affixation of the two ends (27, 28) is done by spark welding.

8. Manufacturing method of a rim for a cycle as per claim 7, characterized in that after the welding step, a first supplemental step is undertaken, consisting of eliminating the welding bead (29) by machining.

9. Manufacturing method of a rim for a cycle as per claim 8, characterized in that after the first supplemental step, a second supplemental step is undertaken, consisting of boring holes (23a, 23b) for the retention eyelets (22a, 22b) of the nuts of the spokes.

10. Manufacturing method of a rim for a cycle as per claim 8, characterized in that in a final step, the eyelets are positioned (22a, 22b) by crimping them.

11. Manufacturing method of a rim for a cycle as per any of the preceding claims, characterized in that after the complementary machining step and before the final step of positioning the eyelets, a third supplemental step of processing the rim by anodization is undertaken.

12. Manufacturing method of a rim of a cycle as per any of claims 1 to 10, characterized in that before the complementary machining step, a third supplemental step of processing the rim by anodization is undertaken.

13. Manufacturing method of a rim for a cycle as per claim 12, characterized in that after the complementary machining step, a fourth supplemental step is undertaken, consisting of depositing a ceramic layer on the two machined flanks.

14. Rim for a cycle, having a general symmetrical plane (P) and a symmetrical axis (XX'), obtained by the method as per any of the preceding claims, characterized in that its two flanks (18, 19) have surfaces machined by removal of material and have constant spacing.

15. Rim for a cycle as per claim 14, characterized in that the two machined flanks (18, 19) are parallel to the general symmetrical plane (P).

16. Rim for a cycle as per claim 15, characterized in that the two machined flanks (18, 19) are convergent.

17. Rim for a cycle as per any of claims 14 to 16, characterized in that it is obtained by an aluminum section between the two wings (3, 4).

18. Rim for a cycle as per claim 17, characterized in that the section comprises between the two wings (3, 4), an inner centering neck (10).

## Patentansprüche

1. Verfahren zur Herstellung einer Felge für ein Rad, dadurch gekennzeichnet, daß das Verfahren einen zusätzlichen Schritt der Bearbeitung der beiden Seiten (18, 19) aufweist, bei dem Material entfernt wird, um zwei Bremsflächen (20, 21) zu bilden, die perfekt sind und einen konstanten Abstand voneinander haben.

2. Verfahren zur Herstellung einer Felge für ein Rad gemäß Anspruch 1, dadurch gekennzeichnet, daß die Bearbeitung durch Spanabhebung mit Hilfe eines Schneidwerkzeuges (34a, 34b) ausgeführt wird.

3. Verfahren zur Herstellung einer Felge für ein Rad gemäß Anspruch 2, dadurch gekennzeichnet, daß die Bearbeitung der Seiten (18, 19) durch Abdrehen geschieht.

4. Verfahren zur Herstellung einer Felge für ein Rad gemäß Anspruch 3, dadurch gekennzeichnet, daß die Bearbeitung der beiden Seiten (18, 19) gleichzeitig geschieht.

5. Verfahren zur Herstellung einer Felge für ein Rad mit einer allgemeinen Symmetrieebene (P) und einer allgemeinen Symmetrieachse (XX') gemäß einem der vorhergehenden Ansprüche, dadurch gekennzeichnet, daß das Verfahren darin besteht, die Felge aus einem Aluminiumprofil herzustellen, das zwei laterale Flügel (3, 4) aufweist, die zwei laterale Seiten (18, 19) bilden.

6. Verfahren zur Herstellung einer Felge für ein Rad gemäß einem der vorhergehenden Ansprüche, dadurch gekennzeichnet, daß vor dem zusätzlichen Schritt das Verfahren die folgenden vorangehenden Schritte aufweist:
- Biegen eines Aluminiumprofilstückes (25), um ihm die Form eines Ringes (26) mit großem Durchmesser zu geben und so die beiden Enden (27, 28) aneinanderanstoßen zu lassen;
- fest Verbinden der beiden Enden (27, 28).

7. Verfahren zur Herstellung einer Felge für ein Rad gemäß Anspruch 6, dadurch gekennzeichnet, daß die feste Verbindung der beiden Enden (27, 28) durch Funkenschweißen geschieht.

8. Verfahren zur Herstellung einer Felge für ein Rad gemäß Anspruch 7, dadurch gekennzeichnet, daß man nach dem Schritt des Schweißens einen ersten hinzugefügten Schritt ausführt, der darin besteht, die Schweißnaht (29) durch Bearbeiten zu entfernen.

9. Verfahren zur Herstellung einer Felge für ein Rad gemäß Anspruch 8, dadurch gekennzeichnet, daß man nach dem ersten hinzugefügten Schritt einen zweiten hinzugefügten Schritt ausführt, der darin besteht, Löcher (23a, 23b) für die Halteösen (22a, 22b) der Muttern der Speichen zu bohren.

10. Verfahren zur Herstellung einer Felge für ein Rad gemäß Anspruch 8, dadurch gekennzeichnet, daß man in einem letzten Schritt die Ösen (22a, 22b) anordnet, indem man sie umbördelt.

11. Verfahren zur Herstellung einer Felge für ein Rad gemäß einem der vorhergehenden Ansprüche, dadurch gekennzeichnet, daß man nach dem zusätzlichen Schritt der Bearbeitung und vor dem letzten Schritt des Anordnens der Ösen einen dritten hinzugefügten Schritt der Behandlung der Felge durch Anodisation durchführt.

12. Verfahren zur Herstellung einer Felge für ein Rad gemäß einem der Ansprüche 1 bis 10, dadurch gekennzeichnet, daß man vor dem zusätzlichen Schritt des Bearbeitens einen dritten hinzugefügten Schritt der Behandlung der Felge durch Anodisation durchführt.

13. Verfahren zur Herstellung einer Felge für ein Rad gemäß Anspruch 12, dadurch gekennzeichnet, daß man nach dem zusätzlichen Schritt der Bearbeitung einen vierten hinzugefügten Schritt durchführt, der darin besteht eine Keramikschicht auf den beiden bearbeiteten Seiten abzulagern.

14. Felge für ein Rad mit einer allgemeinen Symmetrieebene (P) und einer Symmetrieachse (XX'), die durch ein Verfahren gemäß einem der vorhergehenden Ansprüche hergestellt ist, dadurch gekennzeichnet, daß ihre beiden Seiten (18, 19) Oberflächen aufweisen, die durch Entfernen von Material bearbeitet sind und einen konstanten Abstand voneinander haben.

15. Felge für ein Rad gemäß Anspruch 14, dadurch gekennzeichnet, daß die beiden bearbeiteten Seiten (18, 19) parallel zur allgemeinen Symmetrieebene (P) sind.

16. Felge für ein Rad gemäß Anspruch 15, dadurch gekennzeichnet, daß die beiden bearbeiteten Seiten (18, 19) konvergent sind.

17. Felge für ein Rad gemäß einem der Ansprüche 14 bis 16, dadurch gekennzeichnet, daß sie aus einem Aluminiumprofil zwischen den beiden Flügeln (3, 4) hergestellt ist.

18. Felge für ein Rad gemäß Anspruch 17, dadurch gekennzeichnet, daß das Profil zwischen den beiden Flügeln (3, 4) eine innere Auskehlung (10) der Zentrierung aufweist.
